# EUROPEAN PATENT APPLICATION

(11) **EP 4 451 762 A1**
(43) Date of publication of application: **23.10.2024**
(21) Application number: 21967644.2
(22) Date of filing: 15.12.2021
(51) Int. Cl.: H04W 72/04

(54) **METHOD AND APPARATUS FOR DETERMINING CHANNEL ACCESS MODE, AND READABLE STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Stöckeler, Ferdinand
(86) International application number: PCT/CN2021/138537
(87) International publication number: WO 2023/108508

(57) **Abstract**

The present disclosure is applied to the technical field of wireless communications. Provided are a method and apparatus for determining a channel access mode, and a readable storage medium. The method comprises: on the basis of a piece of channel access mode information in downlink control information (DCI), determining a channel access mode of one or more uplink channels, which are scheduled by means of the DCI. In the present disclosure, by using a piece of channel access mode information in DCI, which channel access mode information is used for indicating an application scenario where one uplink channel is scheduled by one piece of DCI, a rational channel access mode in an application scenario where a plurality of uplink channels are scheduled by means of one piece of DCI can be determined without changing the data format of the DCI or increasing data carried by the DCI, thereby improving the data processing capability of a user equipment.

## Description

### TECHNICAL FIELD

The disclosure relates to the field of wireless communication technologies, and more particularly to a method and an apparatus for determining a channel access mode, and a readable storage medium.

### BACKGROUND

In wireless communication technologies, for example, in the 5th generation mobile communication technology (abbreviated as 5G), in an unlicensed spectrum, before a transmitting end occupies a channel to send data, the transmitting end generally needs to perform listening on the channel, i.e., to perform clear channel assessment (CCA). After the transmitting end performs the clear channel assessment, if it is determined that the channel is clear, the channel may be occupied to send and receive the data. A maximum channel occupancy time (MCOT) during which the channel is occupied is agreed by a protocol or configured/indicated by a base station. The channel may not be occupied if it is determined that the channel is occupied. Such process is generally referred to as a channel access mechanism of a listen before talk (LBT) in an unlicensed frequency band. The LBT may also be classified into different types based on a detailed channel access parameter.

In the unlicensed spectrum, a LBT-free channel access mode may be used, that is, the transmitting end may directly occupy the channel without performing channel listening.

Downlink control information (DCI) may have an information field for indicating a channel access mode of an uplink transmission of a terminal. However, in an existing protocol, the DCI merely includes one piece of channel access mode information, and merely a case that one DCI schedules one physical uplink shared channel (PUSCH) is considered. When a user equipment supports that one DCI schedules more than one uplink channel, it is required to consider how to determine channel access modes of the more than one PUSCH.

### SUMMARY

Accordingly, the disclosure provides a method and an apparatus for determining a channel access mode, and a readable storage medium.

According to a first aspect, a method for determining a channel access mode is provided. The method is performed by a user equipment, and includes:
determining channel access modes of more than one uplink channel scheduled by downlink control information (DCI) based on one piece of channel access mode information in the DCI.

With the method, by employing one piece of channel access mode information in the DCI for indicating an application scenario where one DCI schedules one uplink channel, a reasonable channel access mode in an application scenario where one DCI schedules multiple uplink channels may be determined without changing a data format of the DCI or adding data to the DCI, thereby improving a data processing capability of the user equipment.

In a possible implementation, determining the channel access modes of the more than one uplink channel scheduled by the DCI based on the piece of channel access mode information in the DCI includes:
determining that a channel access mode of each of the more than one uplink channel scheduled by the DCI is a third type of channel access mode, in response to the piece of channel access mode information in the DCI indicating the third type of channel access mode.

The third type of channel access mode corresponds to a channel listening-free access mode.

In a possible implementation, determining the channel access modes of the more than one uplink channel scheduled by the DCI based on the piece of channel access mode information in the DCI includes:
determining that a channel access mode of each transmission burst in the more than one uplink channel scheduled by the DCI is a third type of channel access mode, in response to the piece of channel access mode information in the DCI indicating the third type of channel access mode.

The transmission burst includes one or more uplink channels, and the third type of channel access mode corresponds to a channel listening-free access mode.

In a possible implementation, determining the channel access modes of the more than one uplink channel scheduled by the DCI based on the piece of channel access mode information in the DCI includes:
determining that a channel access mode of each transmission burst in the more than one uplink channel scheduled by the DCI is a first type of channel access mode, in response to the piece of channel access mode information in the DCI indicating the first type of channel access mode.

The transmission burst includes one or more uplink channels, and the first type of channel access mode is a channel access mode in which channel listening is performed for N times, where N is an initial value generated by the user equipment based on a specification of the first type of channel access mode, and N is an integer greater than zero.

In a possible implementation, the method further includes:
sending a transmission burst corresponding to a first type of channel access mode, and performing channel listening merely when a first uplink channel included in the transmission burst is sent.

In a possible implementation, determining the channel access modes of the more than one uplink channel scheduled by the DCI based on the piece of channel access mode information in the DCI includes:
determining that a channel access mode of each transmission burst in the more than one uplink channel scheduled by the DCI is a second type of channel access mode, in response to the piece of channel access mode information in the DCI indicating the second type of channel access mode.

The transmission burst includes one or more uplink channels, and the second type of channel access mode is a channel access mode in which channel listening is only performed once.

In a possible implementation, determining the channel access modes of the more than one uplink channel scheduled by the DCI based on the piece of channel access mode information in the DCI includes:
determining that a channel access mode of a first transmission burst in the more than one uplink channel scheduled by the DCI is a second type of channel access mode, in response to the piece of channel access mode information in the DCI indicating the second type of channel access mode.

The transmission burst includes one or more uplink channels, and the second type of channel access mode is a channel access mode in which channel listening is only performed once.

In a possible implementation, the method further includes:
determining that a channel access mode of a transmission burst other than a first transmission burst in the more than one uplink channel scheduled by the DCI is a second type of channel access mode, in response to the piece of channel access mode information in the DCI indicating the second type of channel access mode.

The transmission burst includes one or more uplink channels, and the second type of channel access mode is a channel access mode in which channel listening is only performed once.

In a possible implementation, the method further includes:
determining that a channel access mode of a latter transmission burst is the same as that of a former transmission burst of any two adjacent transmission bursts in the more than one uplink channel scheduled by the DCI, in response to the piece of channel access mode information in the DCI indicating a second type of channel access mode, and an interval between a start moment of the latter transmission burst and an end moment of the former transmission burst being lower than or equal to a preset value; .

The second type of channel access mode is a channel access mode in which channel listening is only performed once.

In a possible implementation, the method further includes:
determining that a channel access mode of a latter transmission burst of any two adjacent transmission bursts in the more than one uplink channel scheduled by the DCI is a first type of channel access mode, in response to the piece of channel access mode information in the DCI indicating a second type of channel access mode, and an interval between a start moment of the latter transmission burst and an end moment of a former transmission burst of the any two adjacent transmission bursts being greater than a preset value.

The first type of channel access mode is a channel access mode in which channel listening is performed for N times, where N is an initial value generated by the user equipment based on a specification of the first type of channel access mode, and N is an integer greater than zero.

In a possible implementation, determining the channel access modes of the more than one uplink channel scheduled by the DCI based on the piece of channel access mode information in the DCI includes:
determining that a channel access mode of a transmission burst other than a first transmission burst in the more than one uplink channel scheduled by the DCI is a first type of channel access mode, in response to the piece of channel access mode information in the DCI indicating a second type of channel access mode.

The first type of channel access mode is a channel access mode in which channel listening is performed for N times, where N is an initial value generated by the user equipment based on a specification of the first type of channel access mode, and N is an integer greater than zero.

According to a second aspect, a communication device is provided. The communication device may be configured to perform steps executed by the user equipment in the first aspect or any possible design of the first aspect. The user equipment may realize respective functions in the above method by a hardware structure, a software module, or a combination of the hardware structure and the software module.

When the communication device in the second aspect is realized by the software module, the communication device may include a processing module.

When the steps in the above first aspect are performed, the processing module is configured to determine channel access modes of more than one uplink channel scheduled by DCI based on one piece of channel access mode information in the DCI.

In a possible implementation, the processing module is configured to determine that a channel access mode of each of the more than one uplink channel scheduled by the DCI is a third type of channel access mode, in response to the piece of channel access mode information in the DCI indicating the third type of channel access mode.

The third type of channel access mode corresponds to a channel listening-free access mode.

In a possible implementation, the processing module is configured to determine that a channel access mode of each transmission burst in the more than one uplink channel scheduled by the DCI is a third type of channel access mode, in response to the piece of channel access mode information in the DCI indicating the third type of channel access mode.

The transmission burst includes one or more uplink channels, and the third type of channel access mode corresponds to a channel listening-free access mode.

In a possible implementation, the processing module is further configured to determine that a channel access mode of each transmission burst in the more than one uplink channel scheduled by the DCI is a first type of channel access mode, in response to the piece of channel access mode information in the DCI indicating the first type of channel access mode.

The transmission burst includes one or more uplink channels, and the first type of channel access mode is a channel access mode in which channel listening is performed for N times, where N is an initial value generated by the user equipment based on a specification of the first type of channel access mode, and N is an integer greater than zero.

In a possible implementation, the communication device further includes a transmitter module, configured to send a transmission burst corresponding to a first type of channel access mode, and to perform channel listening merely when a first uplink channel included in the transmission burst is sent.

In a possible implementation, the processing module is further configured to determine that a channel access mode of each transmission burst in the more than one uplink channel scheduled by the DCI is a second type of channel access mode, in response to the piece of channel access mode information in the DCI indicating the second type of channel access mode.

The transmission burst includes one or more uplink channels, and the second type of channel access mode is a channel access mode in which channel listening is only performed once.

In a possible implementation, the processing module is further configured to determine that a channel access mode of a first transmission burst in the more than one uplink channel scheduled by the DCI is a second type of channel access mode, in response to the piece of channel access mode information in the DCI indicating the second type of channel access mode.

The transmission burst includes one or more uplink channels, and the second type of channel access mode is a channel access mode in which channel listening is only performed once.

In a possible implementation, the processing module is further configured to determine that a channel access mode of a transmission burst other than a first transmission burst in the more than one uplink channel scheduled by the DCI is a second type of channel access mode, in response to the piece of channel access mode information in the DCI indicating the second type of channel access mode.

The transmission burst includes one or more uplink channels, and the second type of channel access mode is a channel access mode in which channel listening is only performed once.

In a possible implementation, the processing module is further configured to determine that a channel access mode of a latter transmission burst is the same as that of a former transmission burst of any two adjacent transmission bursts in the more than one uplink channel scheduled by the DCI, in response to the piece of channel access mode information in the DCI indicating a second type of channel access mode, and an interval between a start moment of the latter transmission burst and an end moment of the former transmission burst being lower than or equal to a preset value; .

The second type of channel access mode is a channel access mode in which channel listening is only performed once.

In a possible implementation, the processing module is further configured to determine that a channel access mode of a latter transmission burst of any two adjacent transmission bursts in the more than one uplink channel scheduled by the DCI is a first type of channel access mode, in response to the piece of channel access mode information in the DCI indicating a second type of channel access mode, and an interval between a start moment of the latter transmission burst and an end moment of a former transmission burst of the any two adjacent transmission bursts being greater than a preset value.

The first type of channel access mode is a channel access mode in which channel of the is performed for N times, where N is an initial value generated by the user equipment based on a specification of the first type of channel access mode, and N is an integer greater than zero.

In a possible implementation, the processing module is further configured to determine that a channel access mode of a transmission burst other than a first transmission burst in the more than one or more scheduled by the DCI is a first type of channel access mode, in response to the piece of channel access mode information in the DCI indicating a second type of channel access mode.

The first type of channel access mode is a channel access mode in which channel listening is performed for N times, where N is an initial value generated by the user equipment based on a specification of the first type of channel access mode, and N is an integer greater than zero.

According to a third aspect, a communication device is provided. The communication device may be configured to perform the steps executed by a network device in the first aspect or any possible design of the first aspect. The network device may realize the functions in the above methods by a hardware structure, a software module, or a combination of the hardware structure and the software module.

When the communication device in the third aspect is realized by the software module, the communication device may include a processing module.

When the steps in the first aspect are performed, the processing module is configured to determine channel access modes of more than one uplink channel scheduled by DCI based on one piece of channel access mode information in the DCI.

According to a fourth aspect, a communication device including a processor and a memory is provided. The memory is configured to store computer programs. The processor is configured to execute the computer programs to realize the first aspect or any possible design of the first aspect.

According to a fifth aspect, a computer readable storage medium is provided. The computer readable storage medium having instructions (called computer programs or programs) stored thereon. A computer is caused to perform the first aspect or any possible design of the first aspect when the instructions are called and executed on the computer.

It is to be understood that, both the foregoing general description and the following detailed description are exemplary and explanatory merely, and are not restrictive of the disclosure.

### BRIEF DESCRIPTION OF THE DRAWINGS

The accompanying drawings herein are used to provide a further understanding of embodiments of the disclosure, and constitute a part of the specification. Exemplary embodiments of embodiments of the disclosure and descriptions thereof are used to explain the embodiments of the disclosure, and do not constitute a limitation for the disclosure, in which:
the accompanying drawings herein, which are incorporated in and constitute a part of this specification, illustrate embodiments consistent with embodiments of the disclosure, and serve to explain the principle of embodiments of the disclosure together with the specification;
FIG. 1 is a structure schematic diagram illustrating a wireless communication system according to an embodiment of the disclosure.
FIG. 2 is a flow chart illustrating a method for determining a channel access mode according to an embodiment.
FIG. 3 is a flow chart illustrating a method for determining a channel access mode according to an embodiment.
FIG. 4 is a flow chart illustrating a method for determining a channel access mode according to an embodiment.
FIG. 6 is a flow chart illustrating a method for determining a channel access mode according to an embodiment.
FIG. 7 is a flow chart illustrating a method for determining a channel access mode according to an embodiment.
FIG. 8 is a flow chart illustrating a method for determining a channel access mode according to an embodiment.
FIG. 9 is a flow chart illustrating a method for determining a channel access mode according to an embodiment.
FIG. 10 is a flow chart illustrating a method for determining a channel access mode according to an embodiment.
FIG. 11 is a block diagram illustrating an apparatus for determining a channel access mode according to an embodiment.
FIG. 12 is a block diagram illustrating an apparatus for determining a channel access mode according to an embodiment.
FIG. 13 is a block diagram illustrating an apparatus for determining a channel access mode according to an embodiment.

### DETAILED DESCRIPTION

Further description is made to embodiments of the disclosure with reference to accompanying drawings and detailed embodiments.

Exemplary embodiments will be described in detail herein, examples of which are illustrated in the accompanying drawings. When the following description refers to the accompanying drawings, the same or similar elements may be denoted by the same numerals in different accompanying drawings, unless otherwise indicated. The implementations described in the following exemplary embodiments do not represent all possible implementations consistent with embodiments of the disclosure. Instead, they are merely examples of apparatuses and methods consistent with some aspects of the disclosure as detailed in the appended claims.

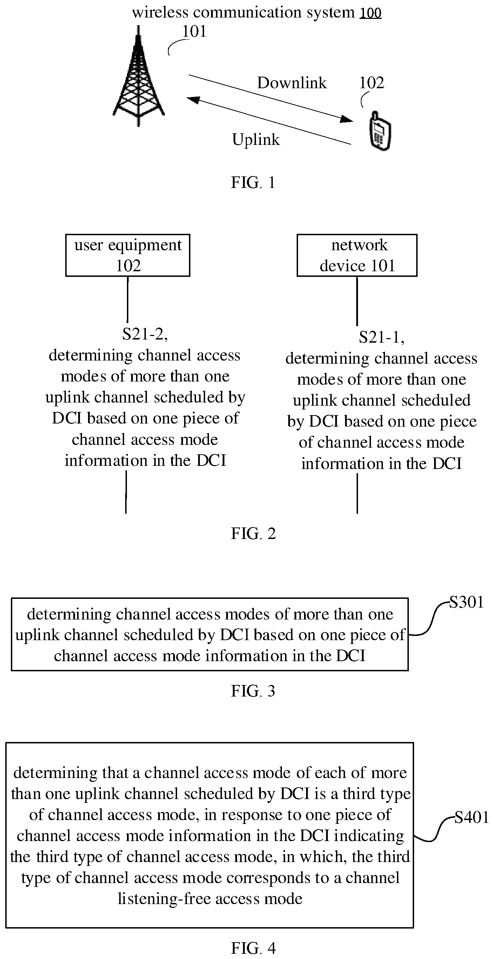

Embodiments of the disclosure provide a method for determining a channel access mode. FIG. 2 is a flow chart illustrating a method for determining a channel access mode according to an embodiment. As illustrated in FIG. 2, the method includes the following steps.

At step S201-1, a network device 101 determines channel access modes of more than one uplink channel scheduled by downlink control information (DCI) based on one piece of channel access mode information in the DCI, or determines channel access modes of more than one uplink channel scheduled by the DCI based on a protocol rule.

At step S201-2, a user equipment 102 determines channel access modes of more than one uplink channel scheduled by the DCI based on one piece of channel access mode information in the DCI.

In a possible implementation, the uplink channel is one of:
a physical uplink shared channel (PUSCH);
a physical uplink control channel (PUCCH); or
a sounding reference signal (SRS) channel.

In a possible implementation, the uplink channel is the PUSCH.

In a possible implementation, the channel access mode includes the following.

A first type of channel access mode, also called Type 1 channel access, corresponds to a channel access mode in which channel listening is performed for N times, where N is an initial value generated by the UE based on a specification of the first type of channel access mode, and N is an integer greater than zero. N may be 1 or a value greater than 1.

A second type of channel access mode, also called Type 2 channel access, corresponds to a channel access mode in which the channel listening is merely performed once.

A third type of channel access mode, also called Type 3 channel access, corresponds to a channel listening-free access mode, that is, there is no need to perform the channel listening, but the channel access may be directly performed.

In a possible implementation, one channel listening corresponds to one clear channel assessment (CCA), and a duration of performing one CCA may be 5us, 9us, etc. The UE monitors an energy level of the channel within the duration.

In a possible implementation, one piece of channel access mode information in the DCI is configured to, when one DCI schedules one uplink channel, indicate a channel access mode of the uplink channel.

In a possible implementation, one DCI may schedule at most 8 PUSCHs when more than one PUSCH is scheduled by the DCI. The more than one PUSCH may or may not be continuous in the time domain, or some of the more than one PUSCH are continuous in the time domain and some of the more than one PUSCH are discontinuous in the time domain.

In the embodiments of the disclosure, by employing one piece of channel access mode information in the DCI for indicating an application scenario where one DCI schedules one uplink channel, a reasonable channel access mode in an application scenario where one DCI schedules multiple uplink channels may be determined without changing a data format of the DCI or adding data to the DCI, thereby improving a data processing capability of the user equipment.

Embodiments of the disclosure provide a method for determining a channel access mode. The method may be performed by a user equipment or a network device. FIG. 3 is a flow chart illustrating a method for determining a channel access mode according to an embodiment. As illustrated in FIG. 3, the method includes the following steps.

At step S301, channel access modes of more than one uplink channel scheduled by DCI are determined based on one piece of channel access mode information in the DCI.

In a possible implementation, the uplink channel is one of:
a physical uplink shared channel (PUSCH);
a physical uplink control channel (PUCCH); or
a sounding reference signal (SRS) channel.

In a possible implementation, the uplink channel is the PUSCH.

In a possible implementation, the channel access mode includes the following.

A first type of channel access mode, also called Type 1 channel access, corresponds to a channel access mode in which channel listening is performed for N times, where N is an initial value generated by the UE based on a specification of the first type of channel access mode, and N is an integer greater than zero. N may be 1 or a value greater than 1. In an example, the initial value may be a random value.

A second type of channel access mode, also called Type 2 channel access, corresponds to a channel access mode in which the channel listening is merely performed once.

A third type of channel access mode, also called Type 3 channel access, corresponds to a channel listening-free access mode, that is, there is no need to perform the channel listening, but the channel access may be directly performed.

In a possible implementation, one piece of channel access mode information in the DCI is configured to, when one DCI schedules one uplink channel, indicate a channel access mode of the uplink channel.

In a possible implementation, one DCI may schedule at most 8 PUSCHs when more than one PUSCH is scheduled by the DCI. The more than one PUSCH may or may not be continuous in the time domain, or some of the more than one PUSCH are continuous in the time domain and some of the more than one PUSCH are discontinuous in the time domain.

In the embodiments of the disclosure, by employing one piece of channel access mode information in the DCI for indicating an application scenario where one DCI schedules one uplink channel, a reasonable channel access mode in an application scenario where one DCI schedules multiple uplink channels may be determined without changing a data format of the DCI or adding data to the DCI, thereby improving a data processing capability of the user equipment.

Embodiments of the disclosure provide a method for determining a channel access mode. The method may be performed by a user equipment or a network device. FIG. 4 is a flow chart illustrating a method for determining a channel access mode according to an embodiment. As illustrated in FIG. 4, the method includes the following steps.

At step S401, it is determined that a channel access mode of each of more than one uplink channel scheduled by DCI is a third type of channel access mode, in response to one piece of channel access mode information in the DCI indicating the third type of channel access mode.

The third type of channel access mode corresponds to a channel listening-free access mode.

In a possible implementation, the third type of channel access mode, also called Type 3 channel access, corresponds to a channel access mode in which the channel access may be directly performed without perform the channel listening.

In a possible implementation, the uplink channel is one of:
a PUSCH; a PUCCH; or an SRS channel.

In a possible implementation, the uplink channel is the PUSCH.

In a possible implementation, one piece of channel access mode information in the DCI is configured to, when one DCI schedules one uplink channel, indicate a channel access mode of the uplink channel.

In a possible implementation, one DCI may schedule at most 8 PUSCHs when more than one PUSCH is scheduled by the DCI. The more than one PUSCH may or may not be continuous in the time domain, or some of the more than one PUSCH are continuous in the time domain and some of the more than one PUSCH are discontinuous in the time domain.

In embodiments of the disclosure, by employing the third type of channel access mode in the DCI, which is configured to indicate an application scenario where one DCI schedules one uplink channel, it is determined that a channel access mode of each uplink channel in the application scenario where one DCI schedules multiple uplink channels is the third type of channel access mode, such that information for the application scenario where one DCI schedules one uplink channel may be applied to information for an application scenario where one DCI schedules one uplink channel, thereby improving a data processing capability of the user equipment.

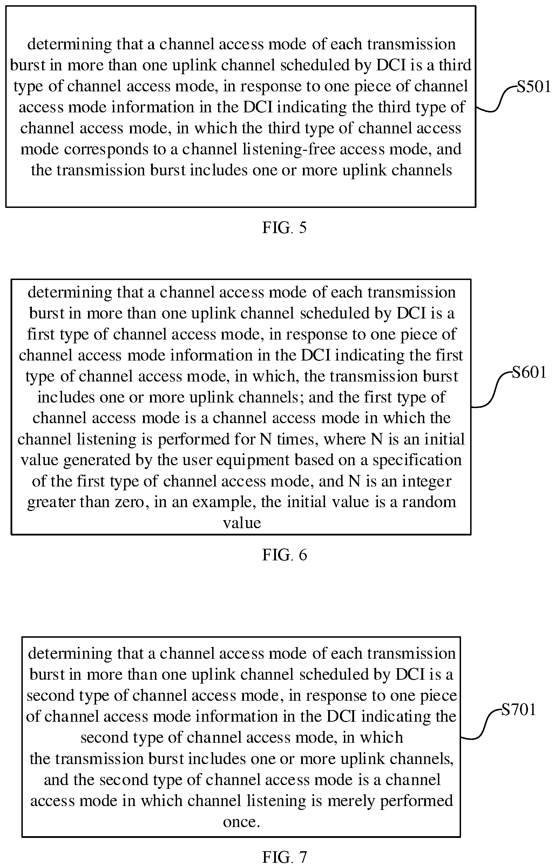

Embodiments of the disclosure provide a method for determining a channel access mode. The method may be performed by a user equipment or a network device. FIG. 5 is a flow chart illustrating a method for determining a channel access mode according to an embodiment. As illustrated in FIG. 5, the method includes the following steps.

At step S501, it is determined that a channel access mode of each transmission burst in more than one uplink channel scheduled by DCI is a third type of channel access mode, in response to one piece of channel access mode information in the DCI indicating the third type of channel access mode.

The transmission burst includes one or more uplink channels, and the third type of channel access mode corresponds to a channel listening-free access mode.

In a possible implementation, the third type of channel access mode, also called Type 3 channel access, corresponds to a channel access mode in which the channel access may be directly performed without perform the channel listening.

In a possible implementation, the transmission burst includes more than one uplink channel in a way such that an interval between two uplink channels is lower than 16 microseconds, and the two uplink channels may be classified into a same transmission burst.

In a possible implementation, multiple uplink channels may merely correspond to one transmission burst, or more than one transmission burst.

In a possible implementation, the uplink channel is one of:
a PUSCH; a PUCCH; or an SRS channel.

In a possible implementation, the uplink channel is the PUSCH.

In a possible implementation, one piece of channel access mode information in the DCI is configured to, when one DCI schedules one uplink channel, indicate a channel access mode of the uplink channel.

In a possible implementation, one DCI may schedule at most 8 PUSCHs when more than one PUSCH is scheduled by the DCI. The more than one PUSCH may or may not be continuous in the time domain, or some of the more than one PUSCH are continuous in the time domain and some of the more than one PUSCH are discontinuous in the time domain.

In embodiments of the disclosure, by employing the third type of channel access mode in the DCI, which is configured to indicate an application scenario where one DCI schedules one uplink channel, it is determined that a channel access mode of each transmission burst in the application scenario where one DCI schedules multiple uplink channels is the third type of channel access mode, such that information for the application scenario where one DCI schedules one uplink channel may be applied to information for an application scenario where one DCI schedules one uplink channel, thereby improving a data processing capability of the user equipment.

Embodiments of the disclosure provide a method for determining a channel access mode. The method may be performed by a user equipment or a network device. FIG. 6 is a flow chart illustrating a method for determining a channel access mode according to an embodiment. As illustrated in FIG. 6, the method includes the following steps.

At step S601, it is determined that a channel access mode of each transmission burst in more than one uplink channel scheduled by DCI is a first type of channel access mode, in response to one piece of channel access mode information in the DCI indicating the first type of channel access mode.

The transmission burst includes one or more uplink channels.

The first type of channel access mode is a channel access mode in which channel listening is performed for N times, where N is an initial value generated by the user equipment based on a specification of the first type of channel access mode, and N is an integer greater than zero. In an example, the initial value may be a random value.

In a possible implementation, the first type of channel access mode, also called Type 1 channel access, corresponds to a channel access mode in which the channel listening is performed for N times, where N is the initial value generated by the UE based on the specification of the first type of channel access mode, and N is the integer greater than zero. N may be 1 or a value greater than 1.

In a possible implementation, the transmission burst includes more than one uplink channel in a way such that an interval between two uplink channels is lower than 16 microseconds, and the two uplink channels may be classified into a same transmission burst.

In a possible implementation, multiple uplink channels may merely correspond to one transmission burst, or more than one transmission burst.

In a possible implementation, the uplink channel is one of:
a PUSCH; a PUCCH; or an SRS channel.

In a possible implementation, the uplink channel is the PUSCH.

In a possible implementation, one piece of channel access mode information in the DCI is configured to, when one DCI schedules one uplink channel, indicate a channel access mode of the uplink channel.

In a possible implementation, one DCI may schedule at most 8 PUSCHs when more than one PUSCH is scheduled by the DCI. The more than one PUSCH may or may not be continuous in the time domain, or some of the more than one PUSCH are continuous in the time domain and some of the more than one PUSCH are discontinuous in the time domain.

In a possible implementation, the method also includes: sending a transmission burst corresponding to the first type of channel access mode, and performing the channel listening merely when the first one of uplink channels included in the transmission burst is sent.

In embodiments of the disclosure, by employing the first type of channel access mode in the DCI, which is configured to indicate an application scenario where one DCI schedules one uplink channel, it is determined that a channel access mode of the first one of uplink channels in each transmission burst in the application scenario where one DCI schedules multiple uplink channels is the first type of channel access mode, such that information for the application scenario where one DCI schedules one uplink channel may be applied to information for an application scenario where one DCI schedules one uplink channel, thereby improving a data processing capability of the user equipment.

Embodiments of the disclosure provide a method for determining a channel access mode. The method may be performed by a user equipment or a network device. FIG. 7 is a flow chart illustrating a method for determining a channel access mode according to an embodiment. As illustrated in FIG. 7, the method includes the following steps.

At step S701, it is determined that a channel access mode of each transmission burst in more than one uplink channel scheduled by DCI is a second type of channel access mode, in response to one piece of channel access mode information in the DCI indicating the second type of channel access mode.

The transmission burst includes one or more uplink channels.

The second type of channel access mode is a channel access mode in which channel listening is merely performed once.

In a possible implementation, the second type of channel access mode, also called Type 2 channel access, corresponds to a channel access mode in which the channel listening is merely performed once.

In a possible implementation, the transmission burst includes more than one uplink channel in a way such that an interval between two uplink channels is lower than 16 microseconds, and the two uplink channels may be classified into a same transmission burst.

In a possible implementation, multiple uplink channels may merely correspond to one transmission burst, or more than one transmission burst.

In a possible implementation, the uplink channel is one of:
a PUSCH; a PUCCH; or an SRS channel.

In a possible implementation, the uplink channel is the PUSCH.

In a possible implementation, one piece of channel access mode information in the DCI is configured to, when one DCI schedules one uplink channel, indicate a channel access mode of the uplink channel.

In a possible implementation, one DCI may schedule at most 8 PUSCHs when more than one PUSCH is scheduled by the DCI. The more than one PUSCH may or may not be continuous in the time domain, or some of the more than one PUSCH are continuous in the time domain and some of the more than one PUSCH are discontinuous in the time domain.

In a possible implementation, the method also includes: sending a transmission burst corresponding to the second type of channel access mode, and performing the channel listening merely when the first one of uplink channels included in the transmission burst is sent.

In embodiments of the disclosure, by employing the second type of channel access mode in the DCI, which is configured to indicate an application scenario where one DCI schedules one uplink channel, it is determined that a channel access mode of the first one of uplink channels in each transmission burst in the application scenario where one DCI schedules multiple uplink channels is the second type of channel access mode, such that information for the application scenario where one DCI schedules one uplink channel may be applied to information for an application scenario where one DCI schedules one uplink channel, thereby improving a data processing capability of the user equipment.

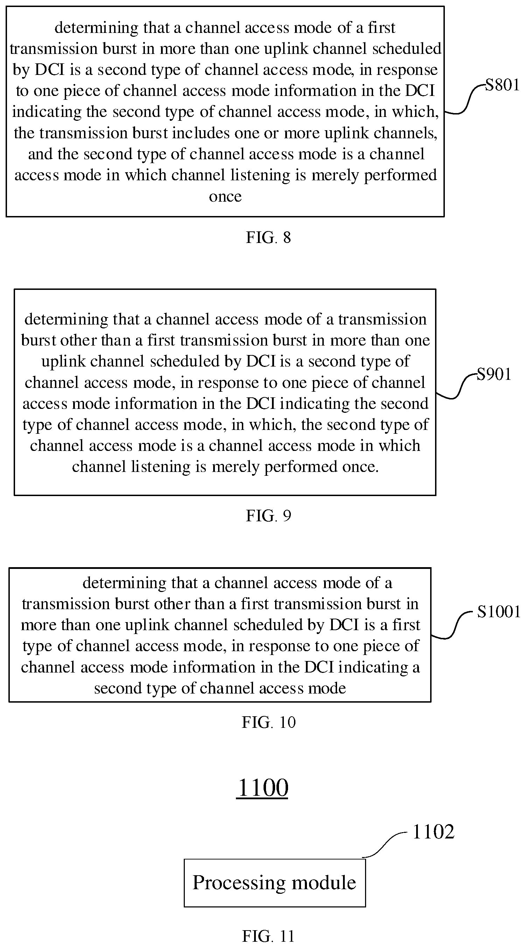

Embodiments of the disclosure provide a method for determining a channel access mode. The method may be performed by a user equipment or a network device. FIG. 8 is a flow chart illustrating a method for determining a channel access mode according to an embodiment. As illustrated in FIG. 8, the method includes the following steps.

At step S801, it is determined that a channel access mode of a first transmission burst in more than one uplink channel scheduled by DCI is a second type of channel access mode, in response to one piece of channel access mode information in the DCI indicating the second type of channel access mode.

The transmission burst includes one or more uplink channels.

The second type of channel access mode is a channel access mode in which channel listening is merely performed once.

In a possible implementation, the second type of channel access mode, also called Type 2 channel access, corresponds to a channel access mode in which the channel listening is merely performed once.

In a possible implementation, the transmission burst includes more than one uplink channel in a way such that an interval between two uplink channels is lower than 16 microseconds, and the two uplink channels may be classified into a same transmission burst.

In a possible implementation, multiple uplink channels may merely correspond to one transmission burst, or more than one transmission burst.

In a possible implementation, the uplink channel is one of:
a PUSCH; a PUCCH; or an SRS channel.

In a possible implementation, the uplink channel is the PUSCH.

In a possible implementation, one piece of channel access mode information in the DCI is configured to, when one DCI schedules one uplink channel, indicate a channel access mode of the uplink channel.

In a possible implementation, one DCI may schedule at most 8 PUSCHs when more than one PUSCH is scheduled by the DCI. The more than one PUSCH may or may not be continuous in the time domain, or some of the more than one PUSCH are continuous in the time domain and some of the more than one PUSCH are discontinuous in the time domain.

In a possible implementation, the step S801 further includes: determining that a channel access mode of a transmission burst other than the first transmission burst in the more than one uplink channel scheduled by the DCI is the second type of channel access mode.

In a possible implementation, the step S801 further includes: determining that a channel access mode of a latter transmission burst is the same as that of a former transmission burst of any two adjacent transmission bursts in the more than one uplink channel scheduled by the DCI, in response to an interval between a start moment of the latter transmission burst and an end moment of the former transmission burst being lower than or equal to a preset value.

In a possible implementation, the step S801 further includes: determining that a channel access mode of a latter transmission burst of any two adjacent transmission bursts in the more than one uplink channel scheduled by the DCI is a first type of channel access mode, in response to an interval between a start moment of the latter transmission burst and an end moment of a former transmission burst of the any two adjacent transmission bursts being greater than a preset value.

In a possible implementation, the method also includes: sending a transmission burst corresponding to the second type of channel access mode, and performing the channel listening merely when the first one of uplink channels included in the transmission burst is sent.

In embodiments of the disclosure, by employing the second type of channel access mode in the DCI, which is configured to indicate an application scenario where one DCI schedules one uplink channel, it is determined that a channel access mode of the first one of uplink channels in the first one of transmission bursts in the application scenario where one DCI schedules the multiple uplink channels is the second type of channel access mode, and the channel access mode of the transmission burst other than the first one of transmission bursts is determined, such that information for the application scenario where one DCI schedules one uplink channel may be applied to information for an application scenario where one DCI schedules one uplink channel, thereby improving the data processing capability of user equipment.

Embodiments of the disclosure provide a method for determining a channel access mode. The method may be performed by a user equipment or a network device. FIG. 9 is a flow chart illustrating a method for determining a channel access mode according to an embodiment. As illustrated in FIG. 9, the method includes the following steps.

At step S901, it is determined that a channel access mode of a transmission burst other than a first transmission burst in more than one uplink channel scheduled by DCI is a second type of channel access mode, in response to one piece of channel access mode information in the DCI indicating the second type of channel access mode.

The second type of channel access mode is a channel access mode in which channel listening is merely performed once.

In a possible implementation, the second type of channel access mode, also called Type 2 channel access, corresponds to a channel access mode in which the channel listening is merely performed once.

Embodiments of the disclosure provide a method for determining a channel access mode. The method is performed by a user equipment or a network device. The method includes:
determining that a channel access mode of a latter transmission burst is the same as that of a former transmission burst of any two adjacent transmission bursts in the more than one uplink channel scheduled by the DCI, in response to the piece of channel access mode information in the DCI indicating a second type of channel access mode, and an interval between a start moment of the latter transmission burst and an end moment of the former transmission burst being lower than or equal to a preset value; ;
   and/or;
determining that a channel access mode of a latter transmission burst of any two adjacent transmission bursts in the more than one uplink channel scheduled by the DCI is a first type of channel access mode, in response to the piece of channel access mode information in the DCI indicating a second type of channel access mode, and an interval between a start moment of the latter transmission burst and an end moment of a former transmission burst of the any two adjacent transmission bursts being greater than a preset value.

The second type of channel access mode is a channel access mode in which the channel listening is merely performed once.

The first type of channel access mode is a channel access mode in which the channel listening is performed for N times, where N is an initial value generated by the user equipment based on a specification of the first type of channel access mode, and N is an integer greater than zero.

Embodiments of the disclosure may be applied to a case where the channel access mode of the first one of transmission bursts in the more than one uplink channel scheduled by the DCI is a default type. In a possible implementation, the default type is the second type of channel access mode.

Embodiments of the disclosure provide a method for determining a channel access mode. The method may be performed by a user equipment or a network device. FIG. 10 is a flow chart illustrating a method for determining a channel access mode according to an embodiment. As illustrated in FIG. 10, the method includes the following steps.

At step S1001, it is determined that a channel access mode of a transmission burst other than a first transmission burst in more than one uplink channel scheduled by DCI is a first type of channel access mode, in response to one piece of channel access mode information in the DCI indicating a second type of channel access mode.

In a possible implementation, the second type of channel access mode, also called Type 2 channel access, corresponds to a channel access mode in which the channel listening is merely performed once.

In a possible implementation, the first type of channel access mode, also called Type 1 channel access, corresponds to a channel access mode in which the channel listening is performed for N times, where N is the initial value generated by the UE based on the specification of the first type of channel access mode, and N is the integer greater than zero. N may be 1 or a value greater than 1.

In view of a fact that the second type of channel access mode (Type 2 channel access) is generally applied in a scenario where the UE shares a COT of gNB, it is required that an interval between an end moment of a latest downlink transmission of the gNB and a start moment of a UE transmission is lower than a certain gap y. The second type of channel access mode may be applied to the first transmission burst based on an instruction of the gNB when the gNB adopts a share COT mode, one piece of DCI is configured to schedule multiple PUSCHs, and an interval between a start moment of the first PUSCH transmission and an end moment of a downlink transmission of a base station is lower than the gap Y. However, for each subsequent transmission burst, it may be difficult for the base station to ensure that the interval between the end moment of the latest downlink transmission and the moment when the UE starts to transmit such burst is lower than the gap Y. Therefore, it is determined that the first type of channel access mode (Type 1 channel access) is configured to a second and subsequent transmission bursts.

Based on a same concept as the above method embodiments, embodiments of the disclosure further provide a communication device. The communication device may have the functions of the user equipment 102 in the above method embodiments, and is configured to perform the steps executed by the user equipment 102 according to the above embodiments. The functions may be realized by hardware, or by software or hardware performing corresponding software. The hardware or software includes one or more modules corresponding to the above functions.

In a possible implementation, a communication device 1100 illustrated in FIG. 11 may be configured as the user equipment 102 involved in the above method embodiments, and perform the steps executed by the user equipment 102 in the above method embodiments.

The communication device 1100 includes: a processing module 1102, configured to determine channel access modes of more than one uplink channel scheduled by DCI based on one piece of channel access mode information in the DCI.

In a possible implementation, the uplink channel is one of:
a physical uplink shared channel (PUSCH);
a physical uplink control channel (PUCCH); or
a sounding reference signal (SRS) channel.

In a possible implementation, the uplink channel is the PUSCH.

In a possible implementation, the channel access mode includes the following.

A first type of channel access mode, also called Type 1 channel access, corresponds to a channel access mode in which channel listening is performed for N times, where N is an initial value generated by the UE based on a specification of the first type of channel access mode, and N is an integer greater than zero. N may be 1 or a value greater than 1. In an example, the initial value is a random value.

A second type of channel access mode, also called Type 2 channel access, corresponds to a channel access mode in which the channel listening is merely performed once.

A third type of channel access mode, also called Type 3 channel access, corresponds to a channel listening-free access mode, that is, there is no need to perform the channel listening, but the channel access may be directly performed.

In a possible implementation, one piece of channel access mode information in the DCI is configured to, when one DCI schedules one uplink channel, indicate a channel access mode of the uplink channel.

In a possible implementation, one DCI may schedule at most 8 PUSCHs when more than one PUSCH is scheduled by the DCI. The more than one PUSCH may or may not be continuous in the time domain, or some of the more than one PUSCH are continuous in the time domain and some of the more than one PUSCH are discontinuous in the time domain.

In embodiments of the disclosure, by employing one piece of channel access mode information in the DCI for indicating an application scenario where one DCI schedules one uplink channel, a reasonable channel access mode in an application scenario where one DCI schedules multiple uplink channels may be determined without changing a data format of the DCI or adding data to the DCI, thereby improving a data processing capability of the user equipment.

In a possible implementation, the communication device 1100 illustrated in FIG. 11 may be taken as the user equipment 102 involved in the above method embodiments, and perform the steps performed by the user equipment 102 in the above method embodiments.

The processing module 1102 is configured to determine that a channel access mode of each of the more than one uplink channel scheduled by the DCI is a third type of channel access mode, in response to the piece of channel access mode information in the DCI indicating the third type of channel access mode.

The third type of channel access mode corresponds to a channel listening-free access mode.

In a possible implementation, the communication device 1100 illustrated in FIG. 11 may be taken as the user equipment 102 involved in the above method embodiments, and perform the steps performed by the user equipment 102 in the above method embodiments.

The processing module 1102 is configured to determine that a channel access mode of each transmission burst in the more than one uplink channel scheduled by the DCI is a third type of channel access mode, in response to the piece of channel access mode information in the DCI indicating the third type of channel access mode.

The third type of channel access mode corresponds to a channel listening-free access mode. The transmission burst includes one or more uplink channels.

In a possible implementation, the communication device 1100 illustrated in FIG. 11 may be taken as the user equipment 102 involved in the above method embodiments, and perform the steps performed by the user equipment 102 in the above method embodiments.

The processing module 1102 is configured to determine that a channel access mode of each transmission burst in the more than one uplink channel scheduled by the DCI is a first type of channel access mode, in response to the piece of channel access mode information in the DCI indicating the first type of channel access mode.

The transmission burst includes one or more uplink channels.

The first type of channel access mode is a channel access mode in which channel listening is performed for N times, where N is an initial value generated by the user equipment based on a specification of the first type of channel access mode, and N is an integer greater than zero.

Based on a same concept as the above method embodiments, embodiments of the disclosure further provide a communication device. The communication device may have the functions of the user equipment 102 in the above method embodiments, and is configured to perform the steps executed by the user equipment 102 according to the above embodiments. The functions may be realized by hardware, or by software or hardware performing corresponding software. The hardware or software includes one or more modules corresponding to the above functions.

In a possible implementation, the communication device 1100 illustrated in FIG. 11 may be taken as the user equipment 102 involved in the above method embodiments, and perform the steps performed by the user equipment 102 in the above method embodiments.

The communication device 1100 includes: a processing module 1102, configured to determine that a channel access mode of each transmission burst in the more than one uplink channel scheduled by the DCI is a first type of channel access mode, in response to the piece of channel access mode information in the DCI indicating the first type of channel access mode.

The transmission burst includes one or more uplink channels.

The first type of channel access mode is a channel access mode in which channel listening is performed for N times, where N is an initial value generated by the user equipment based on a specification of the first type of channel access mode, and N is an integer greater than zero.

In a possible implementation, a transmitter module 1101 is configured to send a transmission burst corresponding to a first type of channel access mode, and to perform channel listening merely when a first uplink channel included in the transmission burst is sent.

In a possible implementation, the communication device 1100 illustrated in FIG. 11 may be taken as the user equipment 102 involved in the above method embodiments, and perform the steps performed by the user equipment 102 in the above method embodiments.

The processing module 1102 is configured to determine that a channel access mode of each transmission burst in the more than one uplink channel scheduled by the DCI is a second type of channel access mode, in response to the piece of channel access mode information in the DCI indicating the second type of channel access mode.

The transmission burst includes one or more uplink channels.

The second type of channel access mode is a channel access mode in which channel listening is only performed once.

In a possible implementation, the communication device 1100 illustrated in FIG. 11 may be taken as the user equipment 102 involved in the above method embodiments, and perform the steps performed by the user equipment 102 in the above method embodiments.

The processing module 1102 is configured to determine that a channel access mode of a first transmission burst in the more than one uplink channel scheduled by the DCI is a second type of channel access mode, in response to the piece of channel access mode information in the DCI indicating the second type of channel access mode.

The transmission burst includes one or more uplink channels, and the second type of channel access mode is a channel access mode in which channel listening is only performed once.

In a possible implementation, the communication device 1100 illustrated in FIG. 11 may be taken as the user equipment 102 involved in the above method embodiments, and perform the steps performed by the user equipment 102 in the above method embodiments.

The processing module 1102 is configured to determine that a channel access mode of a transmission burst other than a first transmission burst in the more than one uplink channel scheduled by the DCI is a second type of channel access mode, in response to the piece of channel access mode information in the DCI indicating the second type of channel access mode.

The transmission burst includes one or more uplink channels, and the second type of channel access mode is a channel access mode in which channel listening is only performed once.

In a possible implementation, the communication device 1100 illustrated in FIG. 11 may be taken as the user equipment 102 involved in the above method embodiments, and perform the steps performed by the user equipment 102 in the above method embodiments.

The processing module 1102 is configured to determine that a channel access mode of a latter transmission burst is the same as that of a former transmission burst of any two adjacent transmission bursts in the more than one uplink channel scheduled by the DCI, in response to the piece of channel access mode information in the DCI indicating a second type of channel access mode, and an interval between a start moment of the latter transmission burst and an end moment of the former transmission burst being lower than or equal to a preset value; .

The second type of channel access mode is a channel access mode in which channel listening is only performed once.

In a possible implementation, the communication device 1100 illustrated in FIG. 11 may be taken as the user equipment 102 involved in the above method embodiments, and perform the steps performed by the user equipment 102 in the above method embodiments.

The processing module 1102 is configured to determine that a channel access mode of a latter transmission burst of any two adjacent transmission bursts in the more than one uplink channel scheduled by the DCI is a first type of channel access mode, in response to the piece of channel access mode information in the DCI indicating a second type of channel access mode, and an interval between a start moment of the latter transmission burst and an end moment of a former transmission burst of the any two adjacent transmission bursts being greater than a preset value.

The first type of channel access mode is a channel access mode in which channel of the is performed for N times, where N is an initial value generated by the user equipment based on a specification of the first type of channel access mode, and N is an integer greater than zero.

In a possible implementation, the communication device 1100 illustrated in FIG. 11 may be taken as the user equipment 102 involved in the above method embodiments, and perform the steps performed by the user equipment 102 in the above method embodiments.

The processing module 1102 is configured to determine that a channel access mode of a transmission burst other than a first transmission burst in the more than one or more scheduled by the DCI is a first type of channel access mode, in response to the piece of channel access mode information in the DCI indicating a second type of channel access mode.

The first type of channel access mode is a channel access mode in which channel listening is performed for N times, where N is an initial value generated by the user equipment based on a specification of the first type of channel access mode, and N is an integer greater than zero.

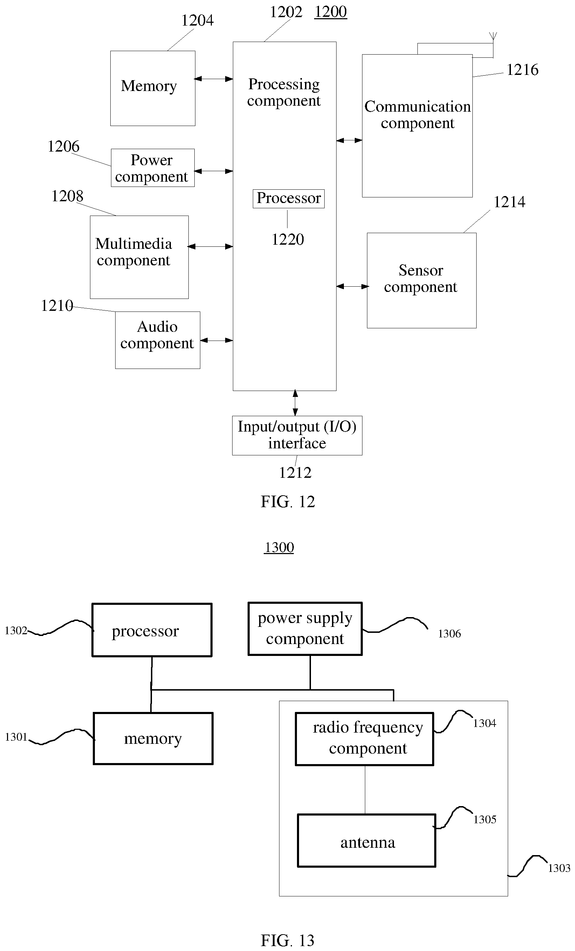

When the communication device is the user equipment 102, a structure of the communication device may also be as illustrated in FIG. 12. Referring to FIG. 12, the apparatus 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the apparatus 1200, such as the operations associated with display, telephone calls, data communications, camera operations, and recording operations. The processing component 1202 may include one or more processors 1220 to perform instructions to perform all or part of the steps in the above described methods. Moreover, the processing component 1202 may include one or more modules which facilitate the interaction between the processing component 1202 and other components. For example, the processing component 1202 may include a multimedia module to facilitate the interaction between the multimedia component 1208 and the processing component 1202.

The memory 1204 is configured to store various types of data to support the operation of the apparatus 1200. Examples of such data include instructions for any applications or methods operated on the apparatus 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the apparatus 1200. The power component 1206 may include a power management system, one or more power sources, and any other components associated with the generation, management, and distribution of power in the apparatus 1200.

The multimedia component 1208 includes a screen providing an output interface between the apparatus 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and the rear camera may receive an external multimedia datum while the apparatus 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone ("MIC") configured to receive an external audio signal when the apparatus 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but be not limited to, a home button, a volume button, a starting button, and a locking button.

The sensor component 1214 includes one or more sensors to provide status assessments of various aspects of the apparatus 1200. For example, the sensor component 1214 may detect an open/closed status of the apparatus 1200, relative positioning of components, e.g., the display and the keypad, of the apparatus 1200, a change in position of the apparatus 1200 or a component of the apparatus 1200, a presence or absence of user contact with the apparatus 1200, an orientation or an acceleration/deceleration of the apparatus 1200, and a change in temperature of the apparatus 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate communication, wired or wirelessly, between the apparatus 1200 and other devices. The apparatus 1200 may access a wireless network based on a communication standard, such as Wi-Fi, 4G, or 5G, or a combination thereof. In an exemplary embodiment, the communication component 1216 receives a broadcast signal or broadcast associated information from an external broadcast management system via a broadcast channel. In an exemplary embodiment, the communication component 1216 also includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an exemplary embodiment, the apparatus 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In an exemplary embodiment, there is also provided a non-transitory computer readable storage medium including instructions, such as included in the memory 1204, executable by the processor 1220 in the apparatus 1200, for performing the above-described methods. For example, the non-transitory computer-readable storage medium may be a ROM, a RAM, a CD-ROM, a magnetic tape, a floppy disc, an optical data storage device, and the like.

Based on a same concept as the above method embodiments, embodiments of the disclosure further provide a communication device. The communication device may have the functions of the network device 101 in the above method embodiments, and is configured to perform the steps executed by the network device 101 according to the above embodiments. The functions may be realized by hardware, or by software or hardware performing corresponding software. The hardware or software includes one or more modules corresponding to the above functions.

In a possible implementation, the communication device 1100 illustrated in FIG. 11 may be configured as the network device 101 involved in the above method embodiments, and perform the steps performed by the network device 101 in the above method embodiments.

The communication device 1100 illustrated in FIG. 11 includes a processing module 1102 for performing the steps executed by the network device 101 in the above method embodiments.

Alternatively, the processing module 1102 is configured to determine channel access modes of more than one uplink channel scheduled by DCI based on a protocol rule.

In a possible implementation, a transceiver module 1102 is configured to send a transmission burst corresponding to a first type of channel access mode, and performs channel listening merely when a first uplink channel included in the transmission burst is sent. When the communication device is the network device, a structure of the communication device may also be illustrated in FIG. 13. The structure of the communication device may be described by taking the network device 101 being a base station as an example. As illustrated in FIG. 13, a device 1300 includes a memory 1301, a processor 1302, a transceiver component 1303 and a power supply component 1306. The memory 1301 is coupled to the processor 1302, and may be configured to store a program and data necessary for the communication device 1300 to realize various functions. The processor 1302 is configured to support the communication device 1300 to perform the corresponding function in the above method. Such function may be realized by calling the program stored in the memory 1301. The transceiver component 1303 may be a wireless transceiver, and may be configured to support the communication device 1300 to receive signaling and/or data and send the signaling and/or data through a wireless air interface. The transceiver module 1303 can also be called a transceiver unit or a communication unit. The transceiver module 1303 can include a radio frequency component 1304 and one or more antennas 1305. The radio frequency component 1304 may be a remote radio unit (RRU), and may be configured to transmission of a radio frequency signal and a conversion between the radio frequency signal and a baseband signal. The one or more antennas 1305 may be configured to radiation and reception of the radio frequency signal.

When the communication device 1300 needs to send data, the processor 1302 may perform baseband processing on the data to be sent, and then output a baseband signal to a radio frequency unit, and the radio frequency unit performs radio frequency processing on the baseband signal and then sends the radio frequency signal in the form of electromagnetic waves through the antenna. When the data is sent to the communication device 1300, the radio frequency unit receives the radio frequency signal through the antenna, converts the radio frequency signal into a baseband signal, and outputs the baseband signal to the processor 1302. The processor 1302 converts the baseband signal into data and processes the data.

Other implementation of embodiments of the disclosure will be apparent to those skilled in the art from consideration of the specification and practice of the disclosure disclosed here. This application is intended to cover any variations, uses, or adaptations of embodiments of the disclosure following the general principles thereof and including such departures from the disclosure as come within known or customary practice in the art. The specification and examples be considered as exemplary only, with a true scope and spirit of embodiments of the disclosure being indicated by the following claims.

It should be understood that embodiments of the disclosure are not limited to the exaction construction that has been described above and illustrated in the accompanying drawings, and that various modifications and changes may be made without departing from the scope thereof. It is intended that the scope of embodiments of the disclosure only be limited by the appended claims.

### Industrial practicability

By employing one piece of channel access mode information in the DCI, which is configured to indicate an application scenario in which one DCI schedules one uplink channel, a reasonable channel access mode in an application scenario where one DCI schedules multiple uplink channels may be determined without changing a data format of the DCI or adding data to the DCI, thereby improving a data processing capability of the user equipment.

## Claims

1. A method for determining a channel access mode, performed by a user equipment, comprising:
determining channel access modes of more than one uplink channel scheduled by downlink control information (DCI) based on one piece of channel access mode information in the DCI.

2. The method of claim 1, wherein determining the channel access modes of the more than one uplink channel scheduled by the DCI based on the piece of channel access mode information in the DCI comprises:
determining that a channel access mode of each of the more than one uplink channel scheduled by the DCI is a third type of channel access mode, in response to the piece of channel access mode information in the DCI indicating the third type of channel access mode;
wherein the third type of channel access mode corresponds to a channel listening-free access mode.

3. The method of claim 1, wherein determining the channel access modes of the more than one uplink channel scheduled by the DCI based on the piece of channel access mode information in the DCI comprises:
determining that a channel access mode of each transmission burst in the more than one uplink channel scheduled by the DCI is a third type of channel access mode, in response to the piece of channel access mode information in the DCI indicating the third type of channel access mode;
wherein the transmission burst comprises one or more uplink channels, and the third type of channel access mode corresponds to a channel listening-free access mode.

4. The method of claim 1, wherein determining the channel access modes of the more than one uplink channel scheduled by the DCI based on the piece of channel access mode information in the DCI comprises:
determining that a channel access mode of each transmission burst in the more than one uplink channel scheduled by the DCI is a first type of channel access mode, in response to the piece of channel access mode information in the DCI indicating the first type of channel access mode;
wherein the transmission burst comprises one or more uplink channels, and the first type of channel access mode is a channel access mode in which channel listening is performed for N times, where N is an initial value generated by the user equipment based on a specification of the first type of channel access mode, and N is an integer greater than zero.

5. The method of claim 1, wherein determining the channel access modes of the more than one uplink channel scheduled by the DCI based on the piece of channel access mode information in the DCI comprises:
determining that a channel access mode of each transmission burst in the more than one uplink channel scheduled by the DCI is a second type of channel access mode, in response to the piece of channel access mode information in the DCI indicating the second type of channel access mode;
wherein the transmission burst comprises one or more uplink channels, and the second type of channel access mode is a channel access mode in which channel listening is only performed once.

6. The method of claim 1, wherein determining the channel access modes of the more than one uplink channel scheduled by the DCI based on the piece of channel access mode information in the DCI comprises:
determining that a channel access mode of a first transmission burst in the more than one uplink channel scheduled by the DCI is a second type of channel access mode, in response to the piece of channel access mode information in the DCI indicating the second type of channel access mode,
wherein the transmission burst comprises one or more uplink channels, and the second type of channel access mode is a channel access mode in which channel listening is only performed once.

7. The method of claim 1 or 6, further comprising:
determining that a channel access mode of a transmission burst other than a first transmission burst in the more than one uplink channel scheduled by the DCI is a second type of channel access mode, in response to the piece of channel access mode information in the DCI indicating the second type of channel access mode,
wherein the transmission burst comprises one or more uplink channels, and the second type of channel access mode is a channel access mode in which channel listening is only performed once.

8. The method according to claim 1 or 6, further comprising:
determining that a channel access mode of a latter transmission burst is same as that of a former transmission burst of any two adjacent transmission bursts in the more than one uplink channel scheduled by the DCI, in response to the piece of channel access mode information in the DCI indicating a second type of channel access mode, and an interval between a start moment of the latter transmission burst and an end moment of the former transmission burst being lower than or equal to a preset value;
wherein the second type of channel access mode is a channel access mode in which channel listening is only performed once.

9. The method according to claim 1 or 6, further comprising:
determining that a channel access mode of a latter transmission burst of any two adjacent transmission bursts in the more than one uplink channel scheduled by the DCI is a first type of channel access mode, in response to the piece of channel access mode information in the DCI indicating a second type of channel access mode, and an interval between a start moment of the latter transmission burst and an end moment of a former transmission burst of the any two adjacent transmission bursts being greater than a preset value;
wherein the first type of channel access mode is a channel access mode in which channel listening is performed for N times, where N is an initial value generated by the user equipment based on a specification of the first type of channel access mode, and N is an integer greater than zero.

10. The method according to claim 1 or 6, wherein determining the channel access modes of the more than one uplink channel scheduled by the DCI based on the piece of channel access mode information in the DCI comprises:
determining that a channel access mode of a transmission burst other than a first transmission burst in the more than one uplink channel scheduled by the DCI is a first type of channel access mode, in response to the piece of channel access mode information in the DCI indicating a second type of channel access mode,
wherein the first type of channel access mode is a channel access mode in which channel listening is performed for N times, where N is an initial value generated by the user equipment based on a specification of the first type of channel access mode, and N is an integer greater than zero.

11. A communication device, comprising:
a processing module, configured to determine channel access modes of more than one uplink channel scheduled by downlink control information (DCI) based on one piece of channel access mode information in the DCI.

12. The communication device of claim 11, further comprising:
a receiving and sending module, configured to send a transmission burst corresponding to a first type of channel access mode, and to perform channel listening merely when a first uplink channel included in the transmission burst is sent.

13. A communication device, comprising a processor and a memory, wherein
the processor is configured to store computer programs; and
the processor is configured to execute the computer programs to implement the method according to any one of claims 1 to 10.

14. A computer readable storage medium having instructions stored thereon, wherein a computer is caused to perform the method according to any one of claims 1 to 10 when the instructions are executed by the computer.
